# EUROPÄISCHE PATENTSCHRIFT

(11) **EP 3 144 751 B1**
(45) Veröffentlichungstag und Bekanntmachung des Hinweises auf die Patenterteilung: **27.10.2021**
(21) Anmeldenummer: 15185932.9
(22) Anmeldetag: 18.09.2015
(51) Int. Cl.: G05B 17/02, G05B 19/4069, G05B 23/02

(54) **STEUERUNGSSYSTEM SOWIE VERFAHREN ZUM BETRIEB EINES STEUERUNGSSYSTEMS MIT EINER REALEN UND EINER VIRTUELLEN STEUERUNG ZUR PROZESSÜBERWACHUNG**
CONTROL SYSTEM, AND METHOD FOR OPERATING A CONTROL SYSTEM WITH A REAL AND A VIRTUAL CONTROLLER FOR PROCESS MONITORING
SYSTÈME DE COMMANDE ET PROCÉDÉ DE FONCTIONNEMENT D'UN SYSTÈME DE COMMANDE DOTÉ D'UNE COMMANDE RÉELLE ET VIRTUELLE DESTINÉE À LA SURVEILLANCE DE PROCESSUS

(43) Veröffentlichungstag der Anmeldung: 22.03.2017
(73) Patentinhaber: Siemens Aktiengesellschaft, 80333 München (DE)
(72) Erfinder: Böhm, Manfred, 91362 Pretzfeld (DE); Seeger, Guido, 91083 Baiersdorf (DE)

(56) Entgegenhaltungen:
- EP-A1- 2 833 223
- EP-A2- 1 901 149
- EP-A2- 1 933 214
- EP-B1- 1 932 618
- WO-A2-02/079885
- DE-A1- 10 351 669
- DE-A1- 10 353 051
- DE-A1-102013 100 465
- DE-U1-202014 104 791

## Beschreibung

Die Erfindung betrifft ein Steuerungssystem, umfassend eine reale Steuerung zur Steuerung eines industriellen Prozesses, einer Anlage oder einer Maschine, eine virtuelle Steuerung zur Simulation der Steuerung des industriellen Prozesses, der Anlage oder der Maschine sowie Synchronisationsmittel zur Synchronisation der realen Steuerung und der virtuellen Steuerung. Ferner betrifft die Erfindung ein Verfahren zum Betrieb eines derartigen Steuerungssystems.

An Steuerungen für industrielle Anlagen oder Maschinen (Werkzeugmaschinen, Produktionsmaschinen, Roboter etc) werden hohe Anforderungen gestellt. Beispielsweise müssen bei der Produktion von Werkstücken mit Hilfe von numerisch gesteuerten Werkzeugmaschinen Werkstücke mit einer definierten Qualität in möglichst kurzer Zeit produziert werden. Stillstandszeiten, z.B. durch Verschleiß, Ausfall, Beschädigung von Maschinenkomponenten oder Werkzeugen müssen vermieden werden. Unzulässige Veränderungen von Maschine und Steuerung, sei es durch Hantierungsfehler oder auch infolge bewusster Manipulation durch Saboteure oder eingeschleuste Schadsoftware müssen ebenfalls aufgedeckt werden.

Um die Prozessqualität fortlaufend zu messen und schädliche Tendenzen frühzeitig zu erkennen, setzen die Betreiber der Anlagen oder Maschinen sowohl auf integrierte als auch auf externe Überwachungen von Prozessdaten aller Art. Qualitätsrelevante Signale werden soweit wie möglich in der Steuerung erfasst, an ein Leitsystem (z.B. MES, Manufacturing Execution Systems) verschickt und dort ausgewertet. Sowohl Umfang als auch Auswertung solcher Datenerfassungen sind durch verschiedene Randbedingungen begrenzt. Die Datenerfassungen belasten die Steuerung mit zusätzlichen Aufgaben und müssen in der Regel mit dem Anlagen- bzw. Maschinenhersteller abgestimmt werden, da die Projektierung der Steuerung gegenüber dem Lieferzustand verändert werden muss. Außerdem müssen dafür noch Ressourcen in der Steuerung frei sein (Speicher, Rechen- und Kommunikationsleistung), damit die Produktivität der Maschine bzw. Anlage nicht leidet. Dadurch sind in der Praxis nur relativ wenige Messgrößen abgreifbar und für die Auswertung und Verknüpfung der Messwerte stehen nur sehr grobe Modelle zur Verfügung, was die frühzeitige Aufdeckung von Störungen erschwert.

Aus Kief "CNC-Handuch" 2013/2014; Teil 5, Kap 4 "Fertigungs-Simulation" sind die Simulation einer Steuerung und einer Maschine mittels einer so genannten virtuellen Steuerung und einer virtuellen Maschine bekannt.

Aus der EP1932618B1 ist die Beobachtung des Arbeitsraumes einer Werkzeugmaschine mittels einer Kamera bekannt, wobei das Kamerabild auf einem Bildschirm angezeigt wird, wobei zeitsynchron mit der realen Bearbeitung eines Werkstücks in der Werkzeugmaschine eine Simulation der Bearbeitung gerechnet wird und wobei zwischen dem Kamerabild und einem durch die Simulation erzeugten virtuellen Bild umgeschaltet werden kann.

Aus der EP 1901149 A2 sind eine Vorrichtung und ein Verfahren zur Simulation eines Ablaufs zur Bearbeitung eines Werkstücks an einer Werkzeugmaschine bekannt, bei denen auch PLC-Bewegungsabläufe der Werkzeugmaschine mit Hilfe einer PLC-Steuereinrichtung und einer PLC-Ablaufsimulationseinrichtung mit simuliert werden. Dadurch wird eine realistische Simulation einer Werkzeugmaschine möglich.

Aus der DE 20 2014 104791 U1 ist ein Simulator für eine Blasformanlage bekannt, der eine vollständige Blasformanlage simuliert und als Blackbox an das Steuerungssystem der Blasformanlage anschließbar ist.

Aus der DE 10 2013 100465 A1 ist ein Simulationsrechner für eine Spritzgießanlage bekannt, der zur Echtzeit-Simulation der Spritzgießanlage mit einer Steuerungseinrichtung für die Spritzgießanlage verbindbar ist.

Aus der DE 10353051 A1 ist ein Anlagensimulator zur Simulation einer Automatisierungsanlage bekannt, wobei der Anlagensimulator eine vollständige Simulation der gesamten Anlage einschließlich einer speicherprogrammierbaren Steuerung erlaubt.

Die EP 1 933 214 A2 betrifft ein Automatisierungssystem zur Erstellung sowie zur Adaption eines Maschinen- oder eines Anlagenmodells sowie zur Prüfung eines Steuerungsprogramms einer Steuerung anhand einer virtuellen Maschine oder einer virtuellen Anlage mit einem Steuerungssystem, mit einer Datenaufzeichnungseinheit zur Aufzeichnung von Maschinen- oder Anlagendaten, einer Datenaufbereitungseinheit zum Analysieren der in der Datenaufzeichnungseinheit aufgezeichneten Daten, wobei die durch die Datenanalyse ermittelten Kenngrößen des Maschinen- oder Anlagenmodells in der virtuellen Maschine oder der virtuellen Anlage automatisch speicherbar sind, um ein Maschinen- oder Anlagenverhalten einer reellen Maschine oder Anlage zu simulieren.

Aus der EP 1 932 618 B1 ist eine Arbeitsmaschine umfassend ein Maschinengestell, mindestens eine am Maschinengestell in einem Arbeitsraum angeordnete erste Arbeitseinheit und mindestens eine an dem Maschinengestell in dem Arbeitsraum angeordnete zweite Arbeitseinheit, von denen mindestens eine zur Durchführung eines Arbeitsvorgangs durch eine Maschinensteuerung gesteuert in dem Arbeitsraum bewegbar ist, wobei der Arbeitsmaschine eine elektronische Visualisierungseinrichtung zugeordnet ist, auf welcher für eine Bedienungsperson im Arbeitsraum stattfindende Arbeitsvorgänge durch Abbildungen von Arbeitseinheiten im Wesentlichen synchron zu realen in der Arbeitsmaschine stattfindenden Arbeitsvorgängen darstellbar sind.

Aus der WO 02/079885 A2 ist Verfahren zur Instandhaltung eines Systems durch Ausführen eines Realprozesses in dem System, gekennzeichnet durch Ausführen eines Simulationsprozesses zeitlich parallel zu dem Realprozess, wobei der Simulationsprozess zumindest einen Teil des Realprozesses simuliert, Vergleichen des Simulationsprozesses mit dem Realprozess oder dem Teil davon unter Gewinnen eines Vergleichsergebnisses und Ableiten von Instandhaltungsmaßnahmen aus dem Vergleichsergebnis.

Die DE 103 51 669 A1 betrifft ein Verfahren zum Steuern eines Handhabungsgeräts, wie eines Mehrachs-Industrieroboters, wobei zunächst ein erwartetes Bild eines Objekts in einem Arbeitsbereich des Handhabungsgeräts mit einem realen Bild des Objekts verglichen wird, anschließend eine Stellungsabweichung des Handhabungsgerätes bestimmt wird und dann Bewegungen zur Minimierung der Stellungsabweichung durchgeführt werden.

Aufgabe der Erfindung ist es, den ordnungsgemäßen Betrieb industrieller Anlagen oder Maschinen sicher und zuverlässig zu überwachen.

Diese Aufgabe wird durch ein Steuerungssystem mit den in Patentanspruch 1 angegebenen Merkmalen gelöst. Ferner wird diese Aufgabe durch ein Verfahren zum Betrieb eines entsprechenden Steuerungssystems mit den in Patentanspruch 9 aufgezeigten Verfahrensschritten gelöst.

Die Erfindung kann vorteilhaft in Verbindung mit einer Vielzahl unterschiedlicher Steuerungen zur Steuerung industrieller Prozesse, Anlagen oder Maschinen eingesetzt werden. Darunter fallen insbesondere speicherprogrammierbare Steuerungen (SPS) zur Steuerung industrieller Prozesse oder Anlagen sowie numerische Steuerungen (CNC) zur Steuerung von Werkzeugmaschinen, Produktionsmaschinen, Robotern etc. Der Begriff "Steuerung" ist im Zusammenhang mit der Erfindung nicht streng im Sinne der Systemtheorie zu verstehen und umfasst selbstverständlich auch Regeleinrichtungen bzw. Regelungsvorgänge.

Ein erfindungsgemäßes Steuerungssystem sieht neben einer oben genannten realen Steuerung auch eine entsprechende virtuelle Steuerung vor, die das Verhalten der realen Steuerung möglichst exakt nachbildet. Dabei ist es im Zusammenhang mit der Erfindung wichtig, dass in der virtuellen Steuerung alle zur Steuerung des Prozesses, der Anlage oder Maschine relevanten Steuerungsparameter zumindest weitgehend zeitsynchron zu der realen Steuerung vorliegen. Die reale Steuerung bekommt somit einen "virtuellen Zwilling" zur Seite gestellt, der die gleiche Steuerungsaufgabe simulativ und schritthaltend zur realen Steuerung ausführt. Steuerungsaufträge werden sowohl an die reale als auch an die virtuelle Steuerung geschickt und von beiden parallel ausgeführt. Daraus resultiert eine weitestgehende Übereinstimmung der in der realen Steuerung und in der virtuellen Steuerung vorhandenen Daten.

Da an der realen Anlage bzw. Maschine auch Ereignisse auftreten können, die von vorne herein nicht bekannt sind, werden diesbezügliche Informationen bzw. Daten von der realen Steuerung auf die virtuelle Steuerung übertragen. Durch diese Datenübertragung wird die virtuelle Steuerung, die parallel zur realen Steuerung läuft, so gestützt, dass sie die Realität - zumindest bereichsweise - sehr genau nachbildet. Nahezu alle in der realen Steuerung vorliegenden Daten liegen dann auch in der virtuellen Steuerung vor.

Zur Synchronisation der realen Steuerung und der virtuellen Steuerung ist es erforderlich, dass auch der virtuellen Steuerung die für die Steuerung der Maschine oder Anlage relevanten Sensorsignale zur Verfügung gestellt werden. Darunter fallen beispielsweise Achsstellungen, Drehzahlen oder eine Vielzahl weiterer Sensorsignale, beispielsweise bezüglich Temperatur, Druck, Position etc. Vorzugsweise werden die betreffenden Sensorsignale parallel an die reale und die virtuelle Steuerung gesendet. Es ist aber auch möglich, dass Sensorsignale über die reale Steuerung an die virtuelle Steuerung weitergeleitet werden.

Um den zumindest näherungsweise zeitsynchronen Betrieb der realen Steuerung und der virtuellen Steuerung zu ermöglichen, umfassen die dafür erforderlichen Synchronisationsmittel entsprechend schnelle Datenverbindungen zwischen der realen Steuerung und der virtuellen Steuerung bzw. zwischen der Anlage oder Maschine und der virtuellen Steuerung. Darüber hinaus verfügen die reale und die virtuelle Steuerung auch über eine entsprechende, dem Fachmann hinlänglich bekannte Software zur Sicherstellung der im Zusammenhang mit der Erfindung erforderlichen Synchronität.

Zur Synchronisation der virtuellen Steuerung mit der realen Steuerung werden vorteilhaft zeitbasierte Daten auf die virtuelle Steuerung übertragen. Dadurch kann insbesondere eine zeitsynchrone Abarbeitung eines Steuerprogramms, z.B. eines Teileprogramms einer Werkzeugmaschine, durchgeführt werden. Weiterhin vorteilhaft werden auch zustandsbasierte Daten von der realen Steuerung auf die virtuelle Steuerung übertragen. Zustandsbasierte Daten spiegeln Systemzustände der realen Steuerung, der realen Maschine oder der realen Anlage wider. Darunter fallen insbesondere viele Daten mit Bezug zu Sensorsignalen der in einer Maschine oder Anlage vorhandenen Sensoren. Diese reichen von einfachen Schalterstellungen über Temperatur, Druck, Lage bis hin zu Daten bezüglich Drehzahlen oder Achsstellungen. Durch die Übertragung der entsprechenden Daten lässt sich die gewünschte Synchronität zwischen der realen Steuerung und der virtuellen Steuerung erreichen.

Zur Synchronisation, d.h. Nachführung des virtuellen Systems, werden allerdings nur solche Ereignisse verwendet, die im realen Betrieb auch erwartungsgemäß vorkommen, wie z.B. allmählicher Werkzeugverschleiß oder der planmäßige Tausch von Werkzeugen und Aggregaten.

Vorteilhaft umfasst das erfindungsgemäße Steuerungssystem eine Steuerungsüberwachungseinrichtung zum Erfassen von Daten, insb. Betriebsdaten, der realen Steuerung und der virtuellen Steuerung, wobei die Steuerungsüberwachungseinrichtung zum Vergleich der von der realen Steuerung erfassten oder daraus hervorgehender Daten mit den von der virtuellen Steuerung erfassten oder daraus hervorgehenden Daten ausgebildet ist und wobei aus dem Vergleich unerwartete Betriebszustände der realen Steuerung erkennbar sind.

Zum Erkennen unerwarteter Betriebszustände können vorteilhaft direkt die aus der realen bzw. der virtuellen Steuerung herrührenden Daten miteinander verglichen werden. Häufig ist es jedoch sinnvoll und notwendig, diese Daten erst aufzubereiten und so nicht direkt die aus den jeweiligen Steuerungen herrührenden Daten miteinander zu vergleichen, sondern - ausschließlich oder zusätzlich - die infolge der Datenaufbereitung aus den direkt übertragenen Daten hervorgehenden Daten. In die Datenaufbereitung können beispielsweise statistische Auswertungen der übertragenen Daten, zeitliche Verläufe etc. mit einfließen.

Unerwartete, das heißt nicht bestimmungsgemäße Betriebszustände, die aufgrund von Ereignissen außerhalb des erwarteten Bereichs auftreten, werden erfindungsgemäß erfasst. Darunter fällt beispielsweise eine nicht von einem Teileprogramm erfasste Unterbrechung der Bearbeitung eines Werkstücks mittels einer Werkzeugmaschine, z.B. wg. Werkzeugbruch oder unerwartet hohem Verschleiß. Unerwartete Betriebszustände werden dadurch erkannt, ggf. als Störungen bewertet und stoßen vorzugsweise eine Problemanalyse an.

Da der parallele Betrieb des virtuellen Teilsystems eine sehr präzise Voraussage der Erwartungswerte erlaubt, kann auch eine sehr präzise Überwachung aufgesetzt werden. Diese Überwachung bedient sich sowohl der verfügbaren Betriebsdaten aus der realen Steuerung als auch solcher aus der virtuellen Steuerung. Aus der virtuellen Steuerung können zusätzliche Daten abgegriffen werden, wenn dies die Überwachungsaufgabe verlangt, da die virtuelle Steuerung deutlich weniger Ressourcenbeschränkungen unterliegt als die reale und auch jederzeit ohne Rücksprache mit dem Maschinenhersteller erweitert werden kann. Da die virtuelle Steuerung außerdem in einer stärker geschützten Umgebung ausgeführt werden kann, lassen sich Manipulationen, die am weniger geschützten realen System vorgenommen wurden, anhand von Verhaltensunterschieden aufdecken.

Der Ausdruck "virtuelle Steuerung" kann im Zusammenhang mit der Erfindung auch für ein virtuelles Steuerungssystem stehen, das neben der eigentlichen virtuellen Steuerung auch eine virtuelle Maschine und/oder ein virtuelles Werkstück - zur Simulation der realen Maschine bzw. des realen Werkstücks - mit umfasst.

Durch die hohe Genauigkeit der virtuellen Nachbildung reichen in der Regel wenige Synchronisationssignale von der realen Maschinensteuerung aus, um den Fertigungsprozess zu überwachen. Die reale Maschinensteuerung wird nur wenig belastet, die dafür notwendigen Ressourcen sind in der Regel verfügbar. Da aus dem virtuellen System viele Informationen abgegriffen werden können, ohne das reale System zusätzlich zu belasten, lassen sich sehr detaillierte und wirksame Überwachungen realisieren. Diese Überwachungen können auch im laufenden Betrieb schnell verändert und besser abgestimmt werden, ohne in den eigentlichen Produktionsprozess einzugreifen oder gar Stillstandszeiten in Kauf zu nehmen. Werden dabei zusätzliche Rechenzeit oder Speicher benötigt, lässt sich dieser auf der Basis von Standard-Hardware einfach bereitstellen. Rücksprache mit dem Maschinenhersteller (wegen Eingriffen in die Konfiguration der Maschinensteuerung) ist nur noch in Ausnahmefällen erforderlich, wenn etwa zusätzliche Synchronisationssignale eingeführt werden, um das virtuelle System besser nachzuführen. Auch für Fehleranalysen, etwa wenn das reale System im Grenzbereich operiert, muss das reale System nicht aus der Produktion herausgenommen werden. Vielmehr kann das virtuelle System kurz abgekoppelt und genauer untersucht werden, oder das virtuelle System wird zur genauen Analyse kopiert und die Analyse erfolgt dann an der Kopie, während die eigentliche Prozessüberwachung weiterläuft.

Das virtuelle System kann gegen unbefugte Manipulation sehr viel wirksamer geschützt werden als das reale. Sabotage durch Menschen, vor allem aber durch Schadsoftware, an der realen Maschine wird durch das unterschiedliche Verhalten von realem und virtuellem System aufgedeckt, da es sehr schwierig ist, beide Teilsysteme synchron und mit gleicher Wirkung anzugreifen.

Das gesamte Steuerungssystem kann hardware-mäßig auf einer einzigen Rechnereinheit implementiert sein. Vorzugsweise ist das Steuerungssystem jedoch auf zwei oder mehrere Rechnereinheiten verteilt, z.B. indem die reale Steuerung, die virtuelle Steuerung und die Steuerungsüberwachungseinrichtung auf getrennten Rechnereinheiten ablaufen. Diese Rechnereinheiten sind über entsprechende Kommunikationseinrichtungen, insbesondere Datennetze, miteinander verbunden. Die Steuerungsüberwachungseinrichtung hat (direkt oder indirekt) sowohl Zugriff auf in der realen Steuerung vorhandene Daten als auch auf in der virtuellen Steuerung vorhandene Daten. Insbesondere aus einem Vergleich dieser Daten kann die Steuerungsüberwachungseinrichtung unerwartete Betriebszustände erkennen. Vorteilhaft können derartige unerwartete Betriebszustände jedoch nicht nur erkannt, sondern auch analysiert werden. Dadurch wird auch eine Kategorisierung unterschiedlicher unerwarteter Betriebszustände möglich. So kann eine erste Kategorie Störungen an der Maschine betreffen. Beispielsweise kann eine Programmunterbrechung aufgrund von Werkzeugbruch eingetreten sein. Das Eintreten derartiger Störungen ist zwar prinzipiell nicht exakt vorhersagbar, es ist jedoch bekannt, dass von Zeit zu Zeit mit derartigen Störungen zu rechnen ist. In der Regel ist die Steuerung der Maschine darauf eingerichtet und bietet automatisch oder manuell aktivierbare Maßnahmen zur Behebung der betreffenden Störung. Die Steuerungsüberwachungseinrichtung kann dann die Behebung der Störung beobachten und nach der Behebung der Störung den Überwachungsvorgang fortsetzen.

Daneben kann es jedoch auch unerwartete Betriebszustände der realen Steuerung geben, deren Ursachen aus Sicht der Steuerungsüberwachungseinrichtung nicht oder nicht leicht ergründbar sind. Ein derartiger Betriebszustand kann beispielsweise daraus resultieren, dass die reale Steuerung und die virtuelle Steuerung aus nicht erkennbarem Grund unterschiedliche Teileprogramme ausführen. Die Ursache dafür könnte in einer ungewollten Manipulation des Teileprogramms der realen Maschine liegen.

Vorteilhaft reagiert die Steuerungsüberwachungseinrichtung unterschiedlich auf unterschiedliche Analyseergebnisse. Kommt die Analyse zu dem Ergebnis, dass lediglich eine geringfügige Abweichung zwischen dem realen und dem virtuellen System vorliegt, beispielsweise eine geringfügige Abweichung der realen Bahn eines Werkzeuges in einer Werkzeugmaschine von der korrespondierende "virtuellen Bahn" innerhalb eines tolerierbaren Bandes, so ist eine "gemäßigte" Reaktion der Steuerungsüberwachungseinrichtung auf diesen unerwarteten Betriebszustand angemessen. Beispielsweise kann an einem Display eines Benutzer-Interface eine entsprechende Fehlermeldung angezeigt werden. Lässt sich anhand der Datenanalyse jedoch kein genauer Grund für die Abweichung des virtuellen Systems von dem realen System feststellen und ist die Abweichung gravierend, so ist es sinnvoll, wenn die Steuerungsüberwachungseinrichtung entsprechend scharf auf den unerwarteten Betriebszustand reagiert. Beispielsweise kann eine Abschaltung der betreffenden Maschine und eine entsprechende Meldung an ein übergeordnetes Steuerungssystem, z.B. ein MES- oder SCADA-System, erfolgen.

Bei einer bevorzugten Ausführungsform der Erfindung erfasst die Steuerungsüberwachungseinrichtung neben den Betriebsdaten aus der realen Steuerung und den korrespondierenden Betriebsdaten aus der virtuellen Steuerung zusätzliche Daten aus der virtuellen Steuerung, ohne die entsprechenden Daten aus der realen Steuerung auszulesen. Dies ist sinnvoll, um die reale Steuerung nicht durch die zusätzlichen Datenzugriffe und - übertragungen zu sehr zu belasten. Bei der virtuellen Steuerung hingegen kann auf sehr hohe Anforderungen hinsichtlich der zu übertragenden Daten stets einfach durch die Bereitstellung einer entsprechenden Hardware reagiert werden, so dass Datenabgriffe in großem Umfang für die virtuelle Steuerung unproblematisch sind. Die zusätzlichen Daten können dann zur Verbesserung der Datenanalyse herangezogen werden.

Beispielsweise liest man aus einer realen CNC-Steuerung nur die ausgeführten Bewegungsbefehle aus und bezieht die Zwischenwerte der Bewegung (Position, Geschwindigkeit, Beschleunigung der verschiedenen Bewegungsachsen) aus der virtuellen Steuerung. Wenn man diese Zwischenwerte überwachen möchte, muss man sie also trotzdem nicht alle aus der realen Steuerung lesen und mit denen aus der virtuellen vergleichen, sondern man vergleicht nur die rechnerische Grundlage (die Bewegungsbefehle) und spart sich für alle rechnerisch abhängigen Werte das Auslesen. Natürlich muss man die Wahrscheinlichkeit, dass durch irgendeine Manipulation oder einen Systemfehler die Rechenergebnisse von realem und virtuellem System unterschiedlich werden könnten, dabei abwägen.

Bei einem anderen Beispiel bezieht man nur die Ist-Positionen der Achsen aus der realen CNC-Steuerung und liest die internen Größen der Regelung, die resultierende geometrische Abweichung von der Bahn usw. aus der virtuellen Steuerung aus.

In bestimmten Situationen ist es sinnvoll und daher bei einer bevorzugten Ausführungsform der Erfindung auch möglich, wenn zur Analyse eines erkannten, unerwarteten Betriebszustandes die Simulation der Steuerung des industriellen Prozesses, der Anlage oder der Maschine mittels der virtuellen Steuerung vorübergehend unterbrochen wird. Dadurch kann die gesamte Rechenleistung zur möglichst raschen Analyse des unerwarteten Betriebszustandes herangezogen werden.

Eine weitere Ausführungsform der Erfindung sieht vor, dass zur Analyse eines unerwarteten Betriebszustandes ein Spiegelbild der virtuellen Steuerung erzeugt wird, insbesondere auf einer weiteren Rechnereinheit, und die Analyse mittels des Spiegelbildes durchgeführt wird. Dadurch wird es auch bei einer begrenzten Rechenleistung der virtuellen Steuerung nicht erforderlich, für die Datenanalyse die Simulation mittels der virtuellen Steuerung zu unterbrechen.

Eine weitere bevorzugte Ausführungsform der Erfindung sieht vor, dass die Steuerungsüberwachungseinrichtung auf Basis der von der realen Steuerung und von der virtuellen Steuerung erzeugten Daten und insbesondere der aus dem Vergleich dieser Daten hervorgehenden Analyse-Ergebnisse Servicedaten generiert, die hilfreich zur raschen Behebung einer Störung sind. Die Servicedaten können dabei Daten umfassen, die Aufschluss darüber geben, wann die Abweichung zwischen der realen Steuerung und der virtuellen Steuerung festgestellt wurde, wie der entsprechende Unterschied festgestellt wurde, bei der Ausführung welches Programmschrittes, insbesondere eines Teileprogramms einer CNC-Steuerung, der Unterschied festgestellt wurde, welche Auswirkungen der erkannte unerwartete Betriebszustand auf die betreffende Steuerung oder Maschine hat, usw. Besonders vorteilhaft werden entsprechende Servicedaten nicht nur in der Steuerungsüberwachungseinrichtung generiert, sondern vorzugsweise automatisch über entsprechende Netzwerk-Verbindungen sofort an einen Service-Provider übertragen. Dort können die übertragenen Daten noch einmal analysiert und entsprechende Service-Maßnahmen eingeleitet werden. Der Service-Provider erkennt anhand der übermittelten Daten vorzugsweise, wann eine Störung aufgetreten ist, wo die Störung aufgetreten ist, bei welcher Steuerung bzw. Maschine die Störung aufgetreten ist, welche Störung aufgetreten ist usw. Dadurch können ohne Zeitverlust geeignete Maßnahmen zur Störungsbeseitigung eingeleitet werden.

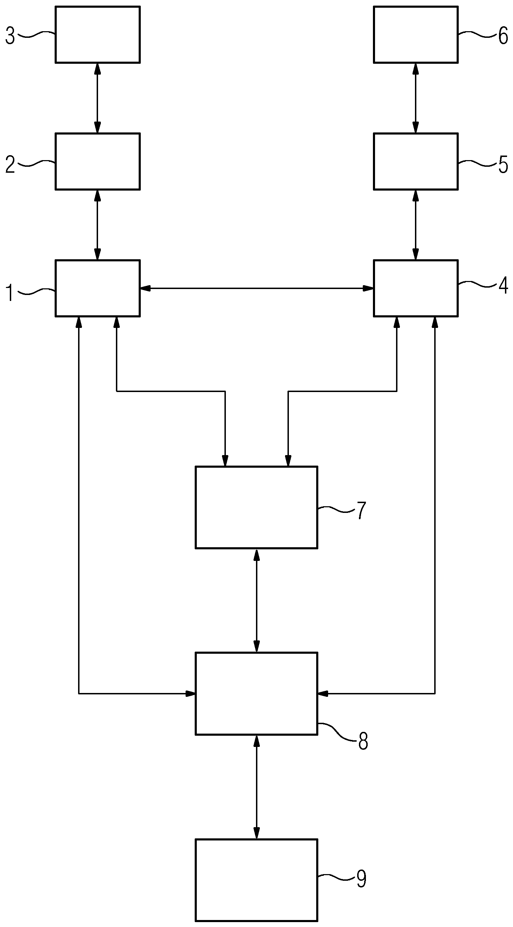

Die Erfindung wird nachfolgend anhand eines Ausführungsbeispiels näher erläutert. Dabei zeigt die Figur eine reale Steuerung 1 zur Steuerung einer realen Werkzeugmaschine 2. Vorteilhaft ist die reale Steuerung 1 als Computerized Numerical Control (CNC) ausgebildet. Die CNC steuert die Werkzeugmaschine 2 zur Herstellung eines realen Werkstücks 3.

Erfindungsgemäß ist neben der realen Steuerung 1 eine virtuelle Maschinensteuerung 4 vorhanden, die vorteilhaft auf einer Standard-Hardware aufsetzt und die reale Steuerung 1 weitestgehend simuliert. Insbesondere führt die virtuelle Steuerung 4 das gleiche Teileprogramm aus wie die reale Steuerung 1. Zur Synchronisation der beiden Steuerungen ist eine Datenverbindung zwischen der realen Steuerung 1 und der virtuellen Steuerung 4 vorhanden. Mittels der so übertragenen Daten können beispielsweise Ereignisse an der realen Maschine 2 mittels der Steuerung 1 erfasst und auf die virtuelle Steuerung 4 übertragen werden, so dass zur Gewährleistung der Synchronität zwischen der realen Steuerung 1 und der virtuellen Steuerung 4 auch reale Maschinendaten durch die virtuelle Steuerung berücksichtigt werden. Weiterhin umfasst das erfindungsgemäße Steuerungssystem auch eine virtuelle Maschine 5, durch die das Verhalten der realen Maschine 2 möglichst realitätsnah simuliert werden kann.

Darüber hinaus wird vorteilhaft auch das reale Werkstück 3 durch ein virtuelles Werkstück 6 simuliert. Letzteres umfasst dafür eine Schnittstelle zur Datenerfassung. So lassen sich die relevanten Daten dort abgreifen.

Damit die Simulation der realen Steuerung 1 mittels der virtuellen Steuerung 4 möglichst gut gelingt, ist eine Verbindung zum Datenaustausch zwischen den beiden Steuerungen 1 und 4 vorgesehen. Da an der realen Maschine auch Ereignisse auftreten können, die von vorne herein nicht bekannt sind, werden diesbezügliche Informationen bzw. Daten von der realen Steuerung 1 auf die virtuelle Steuerung 4 übertragen. Durch diese Datenübertragung wird die virtuelle Steuerung 4 so gestützt, dass sie die Realität sehr genau nachbildet. Nahezu alle in der realen Steuerung 1 vorliegenden Daten liegen dann auch in der virtuellen Steuerung 4 vor.

Zur Simulation der realen Steuerung 1 mittels der virtuellen Steuerung 4 werden vorzugsweise auch der virtuellen Steuerung 4 die zur Steuerung der realen Werkzeugmaschine 2 relevanten Sensorsignale zur Verfügung gestellt. Darunter fallen beispielsweise Achsstellungen oder Drehzahlen. Vorteilhaft werden die betreffenden Sensorsignale parallel an die reale Steuerung 1 und die virtuelle Steuerung 4 gesendet. Es ist aber auch möglich, dass Sensorsignale über die reale Steuerung 1 an die virtuelle Steuerung 4 weitergeleitet werden.

Um den zumindest näherungsweise zeitsynchronen Betrieb der realen Steuerung 1 und der virtuellen Steuerung 4 zu ermöglichen, sind entsprechende Synchronisationsmittel vorhanden. Diese umfassen neben der erforderlichen schnellen Datenverbindung zwischen der realen Steuerung 1 und der virtuellen Steuerung 4 auch eine entsprechende Software zur Sicherstellung der im Zusammenhang mit der Erfindung erforderlichen Synchronität.

Zur Synchronisation, d.h. Nachführung des virtuellen Systems, werden allerdings nur solche Ereignisse verwendet, die im realen Betrieb auch erwartungsgemäß vorkommen, wie z.B. allmählicher Werkzeugverschleiß oder der planmäßige Tausch von Werkzeugen und Aggregaten.

Vorteilhaft umfasst das erfindungsgemäße Steuerungssystem eine Steuerungsüberwachungseinrichtung 7 zum Erfassen von Daten, insb. Betriebsdaten, der realen Steuerung 1 und der virtuellen Steuerung 4, wobei die Steuerungsüberwachungseinrichtung 7 die von der realen Steuerung 1 stammenden oder daraus hervorgehenden Daten und die von der virtuellen Steuerung 4 stammenden oder daraus hervorgehenden Daten analysiert, insbesondere vergleicht, und wobei anhand des Analyseergebnisses unerwartete Betriebszustände der realen Steuerung 1 erkennbar sind.

Unerwartete, das heißt nicht bestimmungsgemäße Betriebszustände, die aufgrund von Ereignissen außerhalb des erwarteten Bereichs auftreten, werden erfindungsgemäß durch die Steuerungsüberwachungseinrichtung 7 erfasst. Darunter fällt beispielsweise eine nicht von einem Teileprogramm erfasste Unterbrechung der Bearbeitung eines Werkstücks mittels der Werkzeugmaschine 2, z.B. wegen Werkzeugbruch oder unerwartet hohem Verschleiß. Unerwartete Betriebszustände werden dadurch erkannt, gegebenenfalls als Störungen bewertet und stoßen vorzugsweise eine Problemanalyse an.

In der Regel wird eine Werkzeugmaschine 2 nicht autonom betrieben, sondern sie arbeitet in einem größeren Fertigungsverbund zusammen mit weiteren Werkzeugmaschinen zur Herstellung bestimmter Güter. Dabei ist es erforderlich, die Produktion mittels der einzelnen Werkzeugmaschinen aufeinander abzustimmen. Hierfür werden von jeder einzelnen Werkzeugmaschine, insbesondere deren Steuerung, entsprechende Daten bezüglich Art, Anzahl, Qualität etc. der hergestellten Werkstücke auf eine übergeordnete Prozessoreinheit 8 übertragen. Bei der übergeordneten Prozessoreinheit 8 kann es sich insbesondere um ein Prozessleitsystem, insbesondere ein SCADA- ein MES- oder ein ERP-System handeln. Darüber hinaus ist im Ausführungsbeispiel ferner vorgesehen, dass die übergeordneten Prozessoreinheit 8 auch Zugriff auf die virtuelle Steuerung 4 hat. Weiterhin sieht eine bevorzugte Ausführungsform der Erfindung vor, dass auch die Steuerungsüberwachungseinrichtung 7 Daten für die übergeordneten Prozessoreinheit 8 liefert, insbesondere immer denn, wenn unvorhergesehene Betriebszustände erkannt werden.

In dem Ausführungsbeispiel gemäß der Figur sind die Steuerungsüberwachungseinrichtung 7 und die übergeordnete Prozessoreinheit 8 als getrennte Funktionsblöcke dargestellt. Diese können jedoch auch in einer einzigen Rechnereinheit implementiert sein. Beispielsweise kann ein Prozessleitsystem mittels einer entsprechenden Vernetzung mit der realen Steuerung 1 und der virtuellen Steuerung 4 in Verbindung mit einer entsprechenden Software auch die Funktion der Steuerungsüberwachungseinrichtung 7 übernehmen. Damit kann auf eine separate Hardware zur Steuerungsüberwachung verzichtet werden.

Eine weitere bevorzugte Ausführungsform der Erfindung sieht vor, dass auf Basis der von der Steuerungsüberwachungseinrichtung 7 aus dem Vergleich der von der realen Steuerung 1 und von der virtuellen Steuerung 4 herrührenden Daten hervorgehenden Analyse-Ergebnisse Servicedaten generiert werden, die hilfreich zur raschen Behebung einer erkannten Störung sind. Vorteilhaft werden entsprechende Servicedaten nicht nur generiert, sondern vorzugsweise automatisch über entsprechende Netzwerk-Verbindungen, im Ausführungsbeispiel über die übergeordneten Prozessoreinheit 8, sofort an einen Service-Provider 9 übertragen. Dort können die übertragenen Daten weiter analysiert und entsprechende Service-Maßnahmen eingeleitet werden. Der Service-Provider erkennt anhand der übermittelten Daten, wann eine Störung aufgetreten ist, wo die Störung aufgetreten ist, bei welcher Steuerung bzw. Maschine die Störung aufgetreten ist, welche Störung aufgetreten ist usw. Dadurch können ohne Zeitverlust geeignete Maßnahmen zur Störungsbeseitigung eingeleitet werden.

## Patentansprüche

1. Steuerungssystem (1, 4), umfassend
- eine reale Steuerung (1) zur Steuerung eines industriellen Prozesses, einer Anlage oder einer Maschine,
- eine virtuelle Steuerung (4) zur Simulation der Steuerung des industriellen Prozesses, der Anlage oder der Maschine,
- Synchronisationsmittel zur Synchronisation der realen Steuerung (1) und der virtuellen Steuerung (4),
- eine Steuerungsüberwachungseinrichtung (7) zum Erfassen von Daten der realen Steuerung (1) und der virtuellen Steuerung (4),
- wobei die Steuerungsüberwachungseinrichtung (7) zum Vergleich der von der realen Steuerung (1) erfassten oder daraus hervorgehender Daten mit den von der virtuellen Steuerung (4) erfassten oder daraus hervorgehender Daten ausgebildet ist,
- **dadurch gekennzeichnet, dass** aus dem Vergleich unerwartete Betriebszustände der realen Steuerung (1) erkennbar sind, wobei zur Synchronisation der virtuellen Steuerung (4) mit der realen Steuerung (1) zeitbasierte Daten und/oder zustandsbasierte Daten von der realen Steuerung (1) auf die virtuelle Steuerung (4) übertragbar sind,
- wobei durch die Steuerungsüberwachungseinrichtung (7) ein erkannter unerwarteter Betriebszustand der realen Steuerung (1) durch den Vergleich der von der realen Steuerung (1) erfassten oder daraus hervorgehender Daten mit den von der virtuellen Steuerung (4) erfassten oder daraus hervorgehender Daten analysierbar ist und abhängig von einem Analyseergebnis eine bestimmte vorgegebene oder vorgebbare Reaktion ausführbar ist,
- wobei die Steuerungsüberwachungseinrichtung (7) ausgebildet ist, unterschiedlich auf unterschiedliche Analyseergebnisse zu reagieren, wobei dann, wenn die Analyse zu dem Ergebnis kommt, dass lediglich eine geringfügige Abweichung zwischen dem realen und dem virtuellen System vorliegt, eine gemäßigte Reaktion der Steuerungsüberwachungseinrichtung (7) auf diesen unerwarteten Betriebszustand durch Ausgabe einer Fehlermeldung erfolgt, und wobei dann, wenn anhand der Datenanalyse kein genauer Grund für die Abweichung des virtuellen Systems von dem realen System festzustellen und die Abweichung gravierend ist, die Steuerungsüberwachungseinrichtung (7) ausgebildet ist, auf den unerwarteten Betriebszustand mit einer Abschaltung der betreffenden Maschine und einer entsprechenden Meldung an ein übergeordnetes Steuerungssystem zu reagieren.

2. Steuerungssystem (1, 4) nach Anspruche 1, wobei die Steuerungsüberwachungseinrichtung (7) zur Analyse neben den erfassten Betriebsdaten zusätzliche Daten aus der virtuellen Steuerung (4) ausliest, ohne die entsprechenden Daten aus der realen Steuerung auszulesen.

3. Steuerungssystem (1, 4) nach einem der Ansprüche 1 oder 2, wobei zur Analyse eines unerwarteten Betriebszustandes die Simulation der Steuerung des industriellen Prozesses, der Anlage oder der Maschine vorübergehend unterbrechbar ist.

4. Steuerungssystem (1, 4) nach einem der vorherigen Ansprüche, wobei zur Analyse eines unerwarteten Betriebszustandes ein Spiegelbild der virtuellen Steuerung (4) erzeugbar ist und die Analyse mittels des Spiegelbildes durchführbar ist.

5. Steuerungssystem (1, 4) nach einem der vorherigen Ansprüche, wobei die reale Steuerung (1) als CNC zur Steuerung einer Werkzeugmaschine ausgebildet ist.

6. Steuerungssystem (1, 4) nach einem der vorherigen Ansprüche, wobei die reale Steuerung (1) mit einer realen Maschine (2) oder Anlage verbunden ist und die virtuelle Steuerung (4) mit einer virtuellen Maschine (2) oder Anlage verbunden ist.

7. Steuerungssystem (1, 4) nach einem der vorherigen Ansprüche, wobei im Falle eines erkannten unerwarteten Betriebszustandes Service-Daten generierbar sind.

8. Steuerungssystem (1, 4) nach Anspruch 7, wobei die Service-Daten automatisch an einen Service-Provider (9) übertragbar sind.

9. Verfahren zum Betrieb eines Steuerungssystems (1, 4), wobei
- ein industrieller Prozess, eine Anlage oder eine Maschine von einer realen Steuerung (1) gesteuert wird,
- die Steuerung des industriellen Prozesses, der Anlage oder der Maschine von einer virtuellen Steuerung (4) simuliert wird,
- die reale Steuerung (1) und die virtuelle Steuerung (4) synchronisiert werden,
- Betriebsdaten der realen Steuerung (1) und der virtuellen Steuerung (4) erfasst werden,
- wobei die von der realen Steuerung (1) erfassten oder daraus hervorgehende Daten mit den von der virtuellen Steuerung (4) erfassten oder daraus hervorgehende Daten miteinander verglichen werden,
- **dadurch gekennzeichnet, dass** aus dem Vergleich unerwartete Betriebszustände der realen Steuerung (1) erkannt werden und
- wobei zur Synchronisation der virtuellen Steuerung (4) mit der realen Steuerung (1) zeitbasierte Daten und/oder zustandsbasierte Daten von der realen Steuerung (1) auf die virtuelle Steuerung (4) übertragen werden,
- wobei ein erkannter unerwarteter Betriebszustand der realen Steuerung (1) durch den Vergleich der von der realen Steuerung (1) erfassten oder daraus hervorgehender Daten mit den von der virtuellen Steuerung (4) erfassten oder daraus hervorgehender Daten analysiert wird und abhängig von einem Analyseergebnis eine bestimmte vorgegebene oder vorgebbare Reaktion ausgeführt wird und
- wobei die Steuerungsüberwachungseinrichtung (7) unterschiedlich auf unterschiedliche Analyseergebnisse reagiert, wobei dann, wenn die Analyse zu dem Ergebnis kommt, dass lediglich eine geringfügige Abweichung zwischen dem realen und dem virtuellen System vorliegt, eine gemäßigte Reaktion der Steuerungsüberwachungseinrichtung (7) auf diesen unerwarteten Betriebszustand durch Ausgabe einer Fehlermeldung erfolgt, und wobei dann, wenn anhand der Datenanalyse kein genauer Grund für die Abweichung des virtuellen Systems von dem realen System festzustellen und die Abweichung gravierend ist, die Steuerungsüberwachungseinrichtung (7) auf den unerwarteten Betriebszustand mit einer Abschaltung der betreffenden Maschine und einer entsprechenden Meldung an ein übergeordnetes Steuerungssystem reagiert.

10. Verfahren zum Betrieb eines Steuerungssystems (1, 4) nach Anspruch 9, wobei zur Analyse neben den erfassten Betriebsdaten zusätzliche Daten aus der virtuellen Steuerung (4) abgegriffen werden, die nicht mit von der realen Steuerung abgegriffenen Daten korrespondieren.

11. Verfahren zum Betrieb eines Steuerungssystems (1, 4) nach einem der Ansprüche 9 oder 10, wobei zur Analyse eines unerwarteten Betriebszustandes die Simulation des industriellen Prozesses, der Anlage oder der Maschine unterbrochen wird.

12. Verfahren zum Betrieb eines Steuerungssystems (1, 4) nach einem der Ansprüche 9 bis 11, wobei zur Analyse eines unerwarteten Betriebszustandes ein Spiegelbild der virtuellen Steuerung (4) erzeugt wird und die Analyse mittels des Spiegelbildes durchgeführt wird.

13. Verfahren zum Betrieb eines Steuerungssystems (1, 4) nach einem der Ansprüche 9 bis 12, wobei im Falle eines erkannten unerwarteten Betriebszustandes Service-Daten generiert werden.

14. Verfahren zum Betrieb eines Steuerungssystems (1, 4) nach Anspruch 13, wobei die Service-Daten automatisch an einen Service-Provider (9) übertragen werden.

## Claims

1. Control system (1, 4), comprising
- a real controller (1) for controlling an industrial process, an installation or a machine,
- a virtual controller (4) for simulating the control of the industrial process, the installation or the machine,
- synchronization means for synchronizing the real controller (1) and the virtual controller (4),
- a control monitoring device (7) for capturing data of the real controller (1) and the virtual controller (4),
- wherein the control monitoring device (7) is designed to compare the data captured or originating from the real controller (1) with the data captured or originating from the virtual controller (4),
**characterized in that**
- unexpected operating states of the real controller (1) are identifiable from the comparison, wherein time-based data and/or state-based data are transferable from the real controller (1) to the virtual controller (4) for the purpose of synchronizing the virtual controller (4) to the real controller (1),
- wherein the control monitoring device (7) is able to analyse an identified unexpected operating state of the real controller (1) by means of the comparison of the data captured or originating from the real controller (1) with the data captured or originating from the virtual controller (4), and is able to take an analysis result as a basis for performing a specific predefined or predefinable reaction,
- wherein the control monitoring device (7) is designed to react differently to different analysis results, wherein if the analysis leads to the result that there is just a slight divergence between the real system and the virtual system, a moderate reaction by the control monitoring device (7) to this unexpected operating state is effected by means of output of an error message, and wherein if, on the basis of the data analysis, it is not possible to discover a precise reason for the divergence of the virtual system from the real system and the divergence is serious, the control monitoring device (7) is designed to react to the unexpected operating state by shutting down the relevant machine and reporting to a superordinate control system accordingly.

2. Control system (1, 4) according to Claim 1, wherein besides the captured operating data the control monitoring device (7) reads additional data from the virtual controller (4) for the purpose of analysis, without reading the corresponding data from the real controller.

3. Control system (1, 4) according to either of Claims 1 and 2, wherein the simulation of the control of the industrial process, the installation or the machine is temporarily interruptible for the purpose of analysing an unexpected operating state.

4. Control system (1, 4) according to one of the preceding claims, wherein a mirror image of the virtual controller (4) is generable for the purpose of analysing an unexpected operating state, and the analysis is able to be carried out by means of the mirror image.

5. Control system (1, 4) according to one of the preceding claims, wherein the real controller (1) is in the form of a CNC for controlling a machine tool.

6. Control system (1, 4) according to one of the preceding claims, wherein the real controller (1) is connected to a real machine (2) or installation and the virtual controller (4) is connected to a virtual machine (2) or installation.

7. Control system (1, 4) according to one of the preceding claims, wherein service data are generable if an unexpected operating state is identified.

8. Control system (1, 4) according to Claim 7, wherein the service data are automatically transferable to a service provider (9).

9. Method for operating a control system (1, 4), wherein
- an industrial process, an installation or a machine is controlled by a real controller (1),
- the control of the industrial process, the installation or the machine is simulated by a virtual controller (4),
- the real controller (1) and the virtual controller (4) are synchronized,
- operating data of the real controller (1) and the virtual controller (4) are captured,
- wherein the data captured or originating from the real controller (1) are compared with the data captured or originating from the virtual controller (4),
**characterized in that**
- unexpected operating states of the real controller (1) are identified from the comparison, and
- wherein time-based data and/or state-based data are transferred from the real controller (1) to the virtual controller (4) for the purpose of synchronizing the virtual controller (4) to the real controller (1),
- wherein an identified unexpected operating state of the real controller (1) is analysed by means of the comparison of the data captured or originating from the real controller (1) with the data captured or originating from the virtual controller (4), and an analysis result is taken as a basis for performing a specific predefined or predefinable reaction, and
- wherein the control monitoring device (7) reacts differently to different analysis results, wherein if the analysis leads to the result that there is just a slight divergence between the real system and the virtual system, a moderate reaction by the control monitoring device (7) to this unexpected operating state is effected by means of output of an error message, and wherein if, on the basis of the data analysis, it is not possible to discover a precise reason for the divergence of the virtual system from the real system and the divergence is serious, the control monitoring device (7) reacts to the unexpected operating state by shutting down the relevant machine and reporting to a superordinate control system accordingly.

10. Method for operating a control system (1, 4) according to Claim 9, wherein besides the captured operating data additional data are tapped off from the virtual controller (4) for the purpose of analysis, which additional data do not correspond to data tapped off from the real controller.

11. Method for operating a control system (1, 4) according to either of Claims 9 and 10, wherein the simulation of the industrial process, the installation or the machine is interrupted for the purpose of analysing an unexpected operating state.

12. Method for operating a control system (1, 4) according to one of Claims 9 to 11, wherein a mirror image of the virtual controller (4) is generated for the purpose of analysing an unexpected operating state, and the analysis is carried out by means of the mirror image.

13. Method for operating a control system (1, 4) according to one of Claims 9 to 12, wherein service data are generated if an unexpected operating state is identified.

14. Method for operating a control system (1, 4) according to Claim 13, wherein the service data are automatically transferred to a service provider (9).

## Revendications

1. Système (1, 4) de commande, comprenant
- une commande (1) réelle pour la commande d'un processus industriel d'une installation ou d'une machine,
- une commande (4) virtuelle pour la simulation de la commande du processus industriel de l'installation ou de la machine,
- des moyens de synchronisation pour la synchronisation de la commande (1) réelle et de la commande (4) virtuelle,
- un dispositif (7) de contrôle de commande pour la saisie de données de la commande (1) réelle et de la commande (4) virtuelle,
- dans lequel le dispositif (7) de contrôle de commande est constitué pour la comparaison des données saisies par la commande (1) réelle ou de données qui en proviennent aux données saisies par la commande (4) virtuelle ou de données qui en proviennent,
- **caractérisé en ce que**
à partir de la comparaison des états de fonctionnement inattendus de la commande (1) réelle peuvent être reconnus, dans lequel pour la synchronisation de la commande (4) virtuelle à la commande (1) réelle des données reposant sur le temps et/ou des données reposant sur l'état peuvent être transmises de la commande (1) réelle à la commande (4) virtuelle,
- dans lequel par le dispositif (7) de contrôle de commande, un état de fonctionnement inattendu, qui est reconnu, de la commande (1) réelle peut être analysé par la comparaison des données saisies par la commande (1) réelle ou en provenant aux données saisies par la commande (4) virtuelle ou en provenant et, en fonction d'un résultat de l'analyse, une réaction définie données à l'avance ou pouvant l'être peut être effectuée,
- dans lequel le dispositif (7) de contrôle de commande est constitué pour réagir différemment à des résultats d'analyse différents, dans lequel, si l'analyse conduit au résultat qu'il y a seulement un écart insignifiant entre le système réel et le système virtuel, il se produit une réaction mesurée du dispositif (7) de contrôle de commande à cet état de fonctionnement inattendu par émission d'un message de défaut et dans lequel si à l'aide de l'analyse de données on ne constate pas de motif précis pour l'écart du système virtuel au système réel, et si l'écart est significatif, le dispositif (7) de contrôle de commande est constitué pour réagir à l'état de fonctionnement inattendu par un arrêt de la machine concernée et par un message correspondant à un système de commande supérieur hiérarchiquement.

2. Système (1, 4) de commande suivant la revendication 1, dans lequel le dispositif (7) de contrôle de commande lit pour l'analyse outre les données de fonctionnement saisies des données supplémentaires à partir de la commande (4) virtuelle sans lire les données correspondantes à partir de la commande réelle.

3. Système (1, 4) de commande suivant l'une des revendications 1 ou 2, dans lequel pour l'analyse d'un état de fonctionnement inattendu, la simulation de la commande du processus industriel de l'installation de la machine est interrompue provisoirement.

4. Système (1, 4) de commande suivant l'une des revendications précédentes, dans lequel pour l'analyse d'un état de fonctionnement inattendu, une image comme en un miroir de la commande (4) virtuelle peut être produite et l'analyse peut être effectuée au moyen de l'image comme en un miroir.

5. Système (1, 4) de commande suivant l'une des revendications précédentes, dans lequel la commande (1) réelle est constituée en CNC pour la commande d'une machine-outil.

6. Système (1, 4) de commande suivant l'une des revendications précédentes, dans lequel la commande (1) réelle est reliée à une machine (2) ou une installation réelle et la commande (4) virtuelle est reliée à une machine (2) ou à une installation virtuelle.

7. Système (1, 4) de commande suivant l'une des revendications précédentes, dans lequel dans le cas où un état de fonctionnement inattendu est reconnu, des données d'entretien peuvent être produites.

8. Système (1, 4) de commande suivant la revendication 7, dans lequel les données d'entretien peuvent être transmises automatiquement à un fournisseur (9) de service d'entretien.

9. Procédé pour faire fonctionner un système (1, 4) de commande, dans lequel
- on commande un processus industriel et une installation d'une machine par une commande (1) réelle,
- on simule la commande du processus industriel de l'installation de la machine par une commande (4) virtuelle,
- on synchronise la commande (1) réelle et la commande (4) virtuelle,
- on saisit des données de fonctionnement de la commande (1) réelle et de la commande (4) virtuelle,
- dans lequel on compare les données saisies par la commande (1) réelle ou en provenant aux données saisies par la commande (4) virtuelle ou en provenant,
- **caractérisé en ce que** l'on reconnaît à partir de la comparaison des états de fonctionnement inattendus de la commande (1) réelle et
- dans lequel pour la synchronisation de la commande (4) virtuelle à la commande (1) réelle, on transmet des données reposant sur le temps et/ou des données reposant sur l'état de la commande (1) réelle à la commande (4) virtuelle,
- dans lequel on analyse un état de fonctionnement inattendu, qui est reconnu, de la commande (1) réelle par la comparaison des données saisies par la commande (1) réelle ou en provenant aux données saisies par la commande (4) virtuelle ou en provenant et, en fonction de l'analyse, on effectue une réaction définie donnée à l'avance ou pouvant l'être et
- dans lequel le dispositif (7) de contrôle de commande réagit différemment à des résultats différents de l'analyse, dans lequel, si l'analyse arrive au résultat qu'il n'y a qu'un écart insignifiant entre le système réel et le système virtuel, il est produit une réaction mesurée du dispositif (7) de contrôle de commande à cet état de fonctionnement inattendu par l'émission d'un message de défaut, et dans lequel si, à l'aide de l'analyse des données on ne constate pas de raisons précises pour l'écart du système virtuel au système réel et l'écart est significatif, le dispositif (7) de commande réagit à l'état de fonctionnement inattendu par un arrêt de la machine concernée et par un message correspondant à un système de commande supérieur hiérarchiquement.

10. Procédé pour faire fonctionner un système (1, 4) de commande suivant la revendication 9, dans lequel, pour l'analyse on prend outre les données de fonctionnement saisies des données supplémentaires provenant de la commande (4) virtuelle, qui ne correspondent pas aux données prises par la commande réelle.

11. Procédé pour faire fonctionner un système (1, 4) de commande suivant l'une des revendications 9 ou 10, dans lequel pour l'analyse d'un état de fonctionnement inattendu, on interrompt la simulation du processus industriel de l'installation de la machine.

12. Procédé pour faire fonctionner un système (1, 4) de commande suivant l'une des revendications 9 à 11, dans lequel pour l'analyse d'un état de fonctionnement inattendu, on produit une image comme en un miroir de la commande (4) virtuelle et on effectue l'analyse au moyen de l'image comme en un miroir.

13. Procédé pour faire fonctionner un système (1, 4) de commande suivant l'une des revendications 9 à 12, dans lequel dans le cas où l'on reconnaît un état de fonctionnement inattendu, on produit des données d'entretien.

14. Procédé pour faire fonctionner un système (1, 4) de commande suivant la revendication 13, dans lequel on transmet des données d'entretien automatiquement à un fournisseur (9) de service d'entretien.
